# EUROPEAN PATENT APPLICATION

(11) **EP 3 496 017 A1**
(43) Date of publication of application: **12.06.2019**
(21) Application number: 17205933.9
(22) Date of filing: 07.12.2017
(51) Int. Cl.: G06Q 10/10

(54) **COMPUTER PROGRAM FOR HEALTHCARE SECTOR BUSINESS PROCESSES AUTOMATION**

(71) Applicant: Centro Aktis Diagnostica e Terapia S.p.A., 80016 Marano di Napoli, NA (IT)
(72) Inventor: DEL PRETE, Antonio, 73100 LECCE (IT); CAPALBO, Vincenzo, 73100 LECCE (IT); SCOPPA, Valerio, 80016 Marano di Napoli (IT)
(74) Representative: Conversano, Gabriele

(57) **Abstract**

Software application for operational processes management, usable in diagnostic and therapy services in health care field:
d) a processes management software, configured to use intensively documents produced by different company departments, and possibly with different software applications, in order to automatize the management process of the case relating to each patient;
e) a project management web-based solution comprising the functions of:
- management of project tasks by allocation to team and notifications management;
- project planning through timeline and milestone and Gantt charts visualization;
- management of human and instrumental resources allocation to the various tasks;

f) a module for synchronous communications management inside a working team
characterized in that said operational processes management software is configured such that it is allowed to customize the rules which regulate the sequence of activities needed for a single case solution.

## Description

### Field of the invention

The present invention relates to a method and a program for company processes automation aimed at improving company performance, with particular reference to companies working in health care field, such for example diagnostic labs, healthcare centers, nursing homes and the like.

In a health care center the main processes are represented by specific or therapeutic diagnostic processes and by processes of customer request management and results delivery. Many users are involved in these processes, with different tasks and competences. These processes are also strongly variable as a function of the inner organization of the specific health care center.

Moreover, it is to be underlined that processes are concerned with specific cases of patients also with very different needs. In fact, even if generally a process starts with a request of a patient and ends with the tests results delivery and/or therapies prescription, they change from time to time both in terms of the users of the process to be involved (for example specialists with different tasks) and in terms of the actions sequence to be undertaken for the specific case (tests sequence and/or specialist examinations). Moreover, in parallel with the strictly health care process it is needed to manage the administrative process (patient check-in, billing, payment check, services accounting of single specialists).

In the context of these processes, the main need is the automation of the information management flow among the actors involved (health care staff and administrative staff) and to favour the interaction with final user (patient) also by means of web channels which allow the administrative work to be better organized.

Anyway, this automation of the information flow has to allow a process flexible management, in which the activities sequence considers the decisions taken by each member of the working team as a function of his own competences.

It is to specified that process means all the rules regulating the activities sequence needed for single case solution, from when the case is presented, as for example by means of the first request of a patient, to when the case is concluded, with last health and administrative documents delivery and filing.

The method and program according to the present invention allow to improve activities programming and collaboration of a plurality of health care professionals in a single case, allowing:
- to share information generated by a specific patient,
- to manage human and possibly instrumental resources availability in a more efficient manner,
- to trace the condition of execution of the single activities.

### State of the art

At the state of the art there are known a plurality of technologies which support in companies the activities of Personnel Management or Human Resources and operational personnel in various departments. Anyway, these are generally different applications for each specific department, which do not often communicate with each other, and which are not always simply to be used. Communication among various company departments, this meaning in particular the management in a department of information generated in another department, can be difficult for the Management of the Center to which these departments belong.

In this case ICT is an opportunity to be exploited, above all with the most innovative solutions currently available. In fact there are many solutions available which take advantage of web based intuitive working space, and the advanced platforms of content management allow to work in an universally accessible collaborative context, visualizing all the company contents and the workflow processes in few moments.

The idea of processes in general and the management of business processes in particular are part of a wider development which has involved information systems projecting from its very beginning. The guide principle of this development is the *separation of concerns,* a principle identified by Edsger Dijkstra and characterized by "focusing attention on some aspects". This principle is translated in individuating sets of correlated functions and in organizing them in a sub-set with limited and well defined responsibilities and interfaces for data exchange and collaboration with other sub-sets.

The development of HW and SW systems useful for processes management has seen the establishment of the approach based on Business Process Management (BPM) disciplines which are able to support both human-centric processes (request processing, suppliers and clients accounting) and system processes (commerce, distribution and inventory management). BPM is necessarily accompanied by the Case Management Modeling and Notation discipline (CMMN) for the creation of a model of content management based on property, documents, files and reports.

Therefore in this context the present invention provides a software application for operational processes management, usable in diagnostic and therapy services in health care field, comprising:
- a module configured to define and manage processes automatically;
- a module for activities and resources (human and instrumental) management dedicated to the development of activities needed for each process. Moreover, the present invention provides a software application comprising tools for: documents creation, modification, sharing and filing, and comprising also a synchronous interactive communication module among users being part of the same team (group of people collaborating in a specific case management) or different teams.

According to another aim the invention provides a method for health care center management, which can be implemented by means of a software application, able to calculate a series of performance parameters in the processes execution, and to highlight critical elements in terms of performance and areas of possible improvement.

### Detailed description of the invention

The solution according to the present invention comprises:
a) a processes management software application;
b) a project management web-based solution;
c) a module for synchronous communications management inside a working team.

The processes management software (a) is configured such that it is allowed to customize the rules which regulate the sequence of activities needed for a single case solution, and such that documents produced by different company departments, and possibly with different software applications, are intensively used in order to automatize the management process of the case relating to each patient, allowing to re-use information contained in a document providing tools for automatic creation of further documents and/or modules containing forms to be filled in.

Company users and health care experts possessing limited software programming skills can project and carry out their own workflows by means of the processes management software. Therefore, this tool allows to computerize processes which were previously based on paper documents and to overcome differences in information systems of the various departments and fields, allowing information transfer among the same.

This can occur by little using IT, technological and human resources. The tool allows to realize web solutions for management of operations flows guided by the forms and process drag-and-drop maps. It is a complete solution for projecting, implementing, carrying out, monitoring and optimizing processes of companies, which provides a native mobile app for iOS and Android, a form builder and a document builder, for creation of user forms and processes output documents respectively.

The project management web-based solution (b) is a software module, which comprises the functions of:
- task management: project tasks management by allocation to team and notifications management;
- project planning through timeline and milestone and Gantt charts visualization;
- project resources management and visualization of allocation of resources to the various tasks;
- visualization by means of graphical interface of the task condition of each project (Kanban View) assigned to each user, with implementation of a function thanks to which the record or the modification of tasks in graphical mode is reflected automatically on the project timeline;
- tracing the time spent by each resource for execution of each task;
- sharing documents inside working groups and integration with outer filing tools, such for example DropBox and Google Drive.

In this context it becomes very important the profiling of various types of users, by means of the association to each of them of one or more competences contained in a dictionary of competences. After the competence profiling, the tasks which can be assigned to each user and the type of documents, which the same can create and/or modify, will vary automatically.

The module for synchronous communications management (c) is provided with the functions of:
- multiple conversation rooms management;
- message persistence, chat history and message research management;
- notifications/alerts and user quotes management;
- code, file and image conversations record. Actually, it is a multi-user chat based on XMPP (Extensible Messaging and Presence Protocol), a set of technologies for persistent management of instant messaging, presence, multi-party chat, voice and video communication, which is based on a Node.js server and database no SQL MongoDB. It is projected to be installed simply, integrated with authentication systems LDAP/Kerberos, and integrated with other applications by means of API REST.

Therefore, the system comprising the three just described elements is able to manage:
- new processes modeling and existing processes modification;
- competence classification definition and management (dictionary of competence management, competences evaluation, user research by competence, radar service i.e. proximity profile, roles management);
- cases classification definition and management;
- creation of the specific case and team associated thereto (creation of the case, team assigned to case, case research, filing, activities research, case properties management, possibility to create a case from predefined and filed model);
- execution management of tasks relating to the specific case (resources allocation, resource management, case input and output);
- management of documents produced during tasks execution which make up each case;
- case and task monitoring (case/task evaluation, filing);
- notification system and communication management among case users.

Thanks to the above listed skills the innovative solution provided is able to support each step characterizing company processes, i.e.: start, planning, execution, monitoring and control, conclusion.

## Claims

1. Software application for operational processes management, usable in diagnostic and therapy services in health care field:
a) a processes management software, configured to use intensively documents produced by different company departments, and possibly with different software applications, in order to automatize the management process of the case relating to each patient;
b) a project management web-based solution comprising the functions of:
- management of project tasks by allocation to team and notifications management;
- project planning through timeline and milestone and Gantt charts visualization;
- management of human and instrumental resources allocation to the various tasks;
c) a module for synchronous communications management inside a working team
**characterized in that** said operational processes management software is configured such that it is allowed to customize the rules which regulate the sequence of activities needed for a single case solution.

2. Software application for operational processes management according to claim 1, **characterized in that** said operational processes management software is configured such that it is allowed to re-use information contained in a document providing tools for automatic creation of further documents and/or modules containing forms to be filled in.

3. Software application for operational processes management according to claim 1 or 2, **characterized in that** said project management web-based solution allows the visualization by means of graphical interface of the task condition of each project (Kanban View) assigned to each user, and comprises a function thanks to which the record or the modification of tasks in graphical mode is reflected automatically on the project timeline.

4. Software application for operational processes management according to claim 3, **characterized in that** said project management web-based solution allows to trace the time spent by each resource for execution of each task; sharing documents inside working groups and integration with outer filing tools.

5. Software application for operational processes management according to claim 3, **characterized in that** said project management web-based solution further comprises tools for the profiling of various types of users, by means of the association to each of them of one or more competences contained in a dictionary of competences, and **in that** after the competence profiling, the tasks which can be assigned to each user and the type of documents, which the same can create and/or modify, will vary automatically.
